# EUROPÄISCHE PATENTSCHRIFT

(11) **EP 1 657 481 B1**
(45) Veröffentlichungstag und Bekanntmachung des Hinweises auf die Patenterteilung: **26.09.2012**
(21) Anmeldenummer: 05023807.0
(22) Anmeldetag: 01.11.2005
(51) Int. Cl.: F16L 37/34, F16L 37/20, F16L 37/56

(54) **Schnellkupplung**
Quick-acting coupling
Raccord rapide

(30) Priorität: 15.11.2004 DE 102004055001
(43) Veröffentlichungstag der Anmeldung: 17.05.2006
(73) Patentinhaber: TEMA Marketing AG, 6300 Zug (CH)
(72) Erfinder: Knuthson, Per, 52050 Stenstorp (SE)
(74) Vertreter: Richter Werdermann Gerbaulet Hofmann

(56) Entgegenhaltungen:
- WO-A-2004/070241
- DE-A1- 4 222 193
- DE-A1- 10 217 922
- DE-A1- 19 938 876

## Beschreibung

Die Erfindung betrifft eine Schnellkupplung mit den im Oberbegriff des Anspruchs 1 genannten Merkmalen. Eine solche Kupplung ist aus DE 102 17 922 A1 bekannt.

Derartige Schnellkupplungen dienen der Verbindung von druckbehafteten, mediumführenden Leitungen und kommen für Flüssigkeiten, beispielsweise Hydrauliköle, Gase und andere geeignete Medien zum Einsatz. Sie bestehen üblicherweise aus zwei Kupplungsteilen, wobei ein erstes Kupplungsteil ein Steckteil und ein zweites Kupplungsteil ein Hülsenteil ist. Zur Kupplung ist das Steckteil in das Hülsenteil einschiebbar. Die gattungsgemäße Schnellkupplung dient auch der Verbindung von unter hohen Mediendrücken stehenden Leitungen. Dabei muss die Verbindung einmal unter Druck im Hülsenteil, ein anderes Mal unter Druck im Steckteil der Kupplung hergestellt werden. Die Verbindung kann auch unter Druck in beiden Kupplungsteilen oder im drucklosen Zustand beider Kupplungsteile hergestellt werden.

Bei Schnellkupplungen für hohe Mediendrücke von beispielsweise 20 bis 50 MPa in einem der beiden oder beiden Kupplungsteilen sind zur leichteren Handhabung beim Kupplungsvorgang Druckreduzierglieder bekannt. Mit Hilfe solcher Druckreduzierglieder ist es möglich, den Druck im Kupplungsteil durch Ableiten einer geringen Menge des Mediums zur Stimseite des Kupplungsteils zu reduzieren. Auf diese Weise wird das Verbinden der Kupplungsteile der Schnellkupplung erleichtert. Die Anordnung von Druckreduziergliedern in beiden Kupplungsteilen ist ebenfalls bekannt.

Aus der DE 41 01 001 A1 ist eine Kupplungsvorrichtung bekannt, bei der ein Druckreduzierglied im Inneren mindestens eines Kupplungsteiles angeordnet und betätigt wird, wenn das Steckteil mit einem Hülsenteil verbunden wird. Das Druckreduzierglied umfasst einen Ableitkanal für den Mediendruck und ein Absperrelement, das in dem Druckreduzierglied angeordnet ist und über ein Betätigungselement betätigt werden kann. Bei Betätigung des Druckreduziergliedes bilden die damit verbundenen Kammern der Kupplungsteile kommunizierende Gefäße, wodurch ein Druckausgleich stattfindet und die Kupplung mit einem geringeren Kraftaufwand geschlossen werden kann.

Ein bei Schnellkupplungen häufig auftretendes Problem besteht darin, dass die in den Kupplungsteilen befindlichen Druckreduzierglieder einen komplizierten konstruktiven Aufbau aufweisen. Zudem führen Verschmutzungen im Medium dazu, dass sich die Druckreduzierglieder zusetzen und die Schnellkupplungen schwergängig werden. Nachteilig ist weiterhin, dass je nach Art der Schnellkupplung das Steckteil oder das Hülsenteil oder beide Kupplungsteile mit den komplizierten Druckreduziergliedern ausgestattet werden müssen.

Zur Lösung dieses Problems sind aus der DE 102 17 922 A1 Schnellkupplungen aus zwei Kupplungsteilen - dem Steckteil und dem Hülsenteil - bekannt, die jedoch mit anderen Druckreduziermöglichkeiten beim Kupplungsvorgang ausgeführt sind. Bei diesen Schnellkupplungen sind in einem Verbindungsblock mehrere Steckteile mehrerer unter Druck stehender Leitungen angeordnet. Die den Steckteilen gegenüberstehenden mehreren Hülsenteile sind in einem weiteren Verbindungsblock zusammengefasst. Einem Zapfen, der zentrisch im Verbindungsblock zwischen den Leitungen angeordnet ist, steht zwischen den Hülsenteilen ein im Verbindungsblock zentrisch angeordneter Steuerkolben gegenüber. Die Hülsenteile sind mit einer Druckentlastungseinrichtung verbunden. Die Elemente der Druckentlastungseinrichtung sind in einem weiteren Verbindungsblock (Steckteil) mit dem Verbindungsblock (Hülsenteil) verbunden.

In die Druckentlastungseinrichtung sind Druckentlastungsventilsysteme integriert. Jeder Leitung ist ein eigenes Druckentlastungsventilsystem zugeordnet. Die vorhandenen Druckentlastungsventilsysteme sind über eine Druckentlastungskammer mit einer gemeinsamen Druckentlastungsleitung verbunden. Diese Anordnung, bei der jeder Leitung ein eigenes Druckentlastungsventilsystem zugeordnet ist, stellt jedoch eine aufwendige Lösung dar.

Ferner problematisch ist zumeist bei den bekannten Schnellkupplungen die Sicherung der Kupplungsteile zueinander. Da die Schnellkupplungen auch in einem sehr hohen Druckbereich von 20 bis 50 MPa eingesetzt werden, sind die Anforderungen an eine feste Verbindung zwischen den Kupplungsteilen sehr hoch, Neben dem eigentlichen, bereits sehr aufwendigen und komplizierten Aufbau der Schnellkupplung besteht somit zusätzlich die Notwendigkeit, Verriegelungselemente am Gehäuse der Schnellkupplung zu integrieren.

Aus der DE 41 01 001 A1 sind zur Verriegelung der Kupplungsteile Verriegelungselemente wie Klemmhülsen und Klemmkugeln bekannt. Diese Verriegelungselemente müssen genau gearbeitet werden, damit beim Kuppeln der Teile eine sichere Verbindung erreicht wird. Problematisch sind dabei der komplizierte Aufbau und die hohen Genauigkeitsanforderungen an die Kupplungsteile und deren zusätzlich anzuordnenden Verriegelungsteilen.

Aus der DE 42 22 193 A1 ist eine Kupplung mit zwei Leitungspaaren bekannt, wobei ein Hebelelement zur sicheren Kupplung verwendet wird. Die WO 2004/070241 A offenbart eine Kupplungskonstruktion, die aber keine zwei Kupplungspaare hat und daher für eine Kupplung der gattungsgemäßen Art nicht einsetzbar ist.

Aus der DE 199 38 876 A1 ist eine Kupplung bekannt, wobei die Kupplung aus einer Mehrzahl von Einzelventilen zur mechanischen Kupplung mit weiteren Einzelventilen besteht. Im entkuppelten Fall wird in jedem speisekreisseitigen Einzelventil durch einen Ventilkörper ein Druckraum gegen den Außenraum abgedichtet. Die Druckräume der Einzelventile sind durch Entlastungsventile von einem gemeinsamen Verbindungskanal getrennt. Es sind ferner Entlastungskanäle vorhanden.

Der Erfindung liegt daher die Aufgabe zugrunde, eine Schnellkupplung der gattungsgemäßen Art bereitzustellen, die in einfacher Weise ein einfaches Kuppeln unter Vermeidung der genannten Nachteile in allen Druckbereichen erlaubt.

Erfindungsgemäß wird diese Aufgabe durch eine Schnellkupplung mit den im Anspruch 1 genannten Merkmalen gelöst. Dadurch, dass eine in einem zweiten Kupplungsteil integrierte oder an dem zweiten Kupplungsteil in einem Zusatzblock extern angeordnete zentrale Druckentlastungseinrichtung über Druckentlastungsverbindungsleitungen mit den unter Druck stehenden Leitungen verbindbar ist und die Kupplungsteile reversibel durch ein Hebelelement von einer ungekuppelten Position in eine gekuppelte Position bringbar und arretierbar sind, ist eine Schnellkupplung geschaffen, für die zur Druckentlastung während eines Kupplungsvorganges eine zentrale Druckentlastungseinrichtung notwendig ist. In vorteilhafter Weise wird durch das Hebelelement sichergestellt, dass eine leichte Führung zueinander und in der gekuppelten Position eine sichere Kupplung der Kupplungsteile gewährleistet ist. Die Kupplungsteile sind in der gekuppelten Position sicher arretiert. Erfindungsgemäß wird durch die Lösung der Aufgabe eine Kupplung geschaffen, die in vorteilhafter Weise einen einfacheren Aufbau aufweist, der zudem den Sicherheitsanforderungen von Schnellkupplung insbesondere in höheren Druckbereichen entspricht.

Das die Schnellkupplung bildende erste Kupplungsteil ist ein Steckteil und das zweite Kupplungsteil ein Hülsenteil. Das Steckteil ist gemeinsam mit einem ersten Führungsstift (Arbeitsstößel) in einem zum Steckteil gehörenden zweiten Verbindungsblock gelagert. Das Hülsenteil ist in einem ersten Verbindungsblock angeordnet.

Die erfindungsgemäße Ausgestaltung weist die Schnellkupplung für die zentrale Druckentlastungseinrichtung eine Steuereinrichtung auf. Diese Steuereinrichtung ist in dem ersten und zweiten Verbindungsblock oder in einer weiteren Ausführungsvariante in dem ersten und zweiten Verbindungsblock oder in dem ersten und zweiten Verbindungsblock und dem am zweiten Kupplungsteil anliegenden Zusatzblock angeordnet. Durch die Verbindungsblöcke oder dem am ersten Verbindungsblock des zweiten Kupplungsteiles angeordneten Zusatzblock ergibt sich ein sehr kompakter Aufbau der erfindungsgemäßen Schnellkupplung.

Die Erfindung sieht ferner vor, dass als Steuereinrichtung ein im Steckteil angeordneter erster Führungsstift in gekuppelter Position auf eine im ersten Verbindungsblock angeordnete Steuerhülse einwirkt, durch die ein Druckentlastungsventilsystem der zentralen Druckentlastungseinrichtung in dem ersten Verbindungsblock oder dem ersten Verbindungsblock und dem Zusatzblock betätigbar ist.

Die zentrale Druckentlastungseinrichtung umfasst das Druckentlastungsventilsystem und ein Eliminierungsventil mit einer Druckentlastungsleitung. Zwischen dem Druckentlastungsventilsystem und der Druckentlastungsleitung des Eliminierungsventils ist zusätzlich eine Druckkammer angeordnet.

Eine weitere bevorzugte Ausgestaltung der Erfindung sieht ferner vor, dass in der Schnellkupplung mehrere Kupplungspaare angeordnet sind.

Die erfindungsgemäßen Merkmale bestehen darin, dass mehrere Kupplungspaare über die extern, also außerhalb des Steckteiles beziehungsweise des Hülsenteiles zentral angeordnete Druckentlastungseinrichtung beim Kuppelvorgang druckentlastbar ausgeführt sind. Die zentrale Druckentlastungseinrichtung ist über die Druckentlastungsverbindungsleitungen mit jeder der unter Druck stehenden Leitungen, also dem jeweiligen Kupplungspaar, verbunden.

In weiterer bevorzugter Ausgestaltung der Erfindung ist jedem Kupplungspaar in den Druckentlastungsverbindungsleitungen mindestens ein Rückschlagventil zugeordnet, mittels dem die Druckentlastung zwischen den unter Druck stehenden Leitungen und der zentralen Druckentlastungseinrichtung einstellbar ist.

Das für alle Kupplungspaare beziehungsweise den zugehörigen unter Druck stehenden Leitungen vorhandene Druckentlastungsventilsystem der zentralen Druckentlastungseinrichtung öffnet sich in Abhängigkeit der angeordneten Steuereinrichtung beim Kuppeln der Kupplungspaare. Die Steuereinrichtung stellt sicher, dass druckbehaftete Teile des Kupplungspaares über die Druckentlastungseinrichtung zum richtigen Zeitpunkt druckentlastet werden, wodurch dass Medium in die Druckkammer strömt und von dort in die Druckentlastungsleitung des Eliminierungsventils evakuiert wird.

In bevorzugter Ausgestaltung der Erfindung ist durch die Steuereinrichtung beim Kupplungsvorgang entsprechend der auf der Steuerhülse angeordneten Steuernocke eine Synchronisation der Öffnung des Druckentlastungsventilsystems mit dem Kupplungsvorgang möglich.

Somit findet der Druckausgleich mehrerer Kupplungspaare synchron über die Druckentlastungsverbindungsleitungen in der Druckentlastungseinrichtung statt. Die angeordneten Rückschlagventile der jeweiligen Kupplungspaare ermöglichen eine Einstellung jeder druckbehafteten Leitung.

Zur Erreichung eines möglichst kurzen aber synchronisierten Öffnens des Drukkentlastungsventilsystems ist die Steuerhülse so angeordnet, dass sich die Steuernocke genau zu dem Zeitpunkt in das Druckentlastungsventilsystem hineinbewegt beziehungsweise herausbewegt wird, wenn sich die jeweiligen Dichteinrichtungen in den Kupplungsteilen öffnen beziehungsweise schließen, so dass zu einem genauen vorbestimmbaren Zeitpunkt die Druckentlastung stattfindet.

In vorteilhafter Ausgestaltung ist ein internes Druckreduzierglied im Inneren eines Kupplungsteiles angeordnet.

In erfindungsgemäßer und vorteilhafter Weise wird das erste und zweite Kupplungsteil reversibel durch ein Hebelelement von einer ungekuppelten Position in eine gekuppelte Position gebracht und in der gekuppelten Position entsprechend arretiert. Erfindungsgemäß ist dazu am ersten Verbindungsblock eine Hebelbefestigung für das Hebelelement mit seinem angeordneten Hebelarm vorhanden. Der zweite Verbindungsblock weist erfindungsgemäß ein Aufnahmeelement auf, in welches eine Hebelaufnahme des Hebelelementes bereits in ungekuppelter Stellung eingreift. Dadurch ist durch Betätigung des Hebelelementes das erste Kupplungsteil (Steckteil) durch Schwenken des Hebelelementes an das zweite Kupplungsteil (Hülsenteil) heranführbar und in der gekuppelten Stellung durch das Hebelelement sicherbar. Bei dieser von außen durch das Hebelelement unterstützten Kupplung greift der erste Führungsstift (Arbeitsstößel) an der im ersten Verbindungsblock angeordneten Steuerhülse an und bildet gemeinsam mit der Druckentlastungseinrichtung die Steuereinrichtung für die Druckentlastung der Schnellkupplung aus.

Durch die im ersten Verbindungsblock oder in einer weiteren Ausführungsvariante in dem Zusatzblock angeordneten Druckentlastungsverbindungsleitungen werden somit alle angeordneten Kupplungspaare innerhalb der Schnellkupplung über die zentrale Druckentlastungseinrichtung gleichzeitig druckentlastet.

Nachfolgend werden weitere bevorzugte Ausgestaltungen der Erfindung anhand eines Kupplungspaares beschrieben.

Die Ausgestaltungen gelten für jedes Kupplungspaar entsprechend also auch bei Ausführungen von mehreren Kupplungspaaren innerhalb der erfindungsgemäßen Schnellkupplung.

Eine bevorzugte Ausgestaltung der Erfindung ist es, dass die unter Druck stehenden Leitungen miteinander gekoppelt werden, wodurch gleichzeitig eine axiale Verlagerung des ersten Führungsstiftes (Arbeitsstößel) im zweiten Verbindungsblock des Steckteiles in Richtung des ersten Verbindungsblocks des Hülsenteiles oder des ersten Verbindungsblocks (Kupplungsblock) und des Zusatzblocks stattfindet. Der erste Führungsstift (Arbeüsstößel) verschiebt die Steuerhülse, die im ersten VerbindungsblocK des Hülsenteiles oder des ersten verbindungsblocks (Kupplungsblock) und des Zusatzblocks angeordnet ist. Zunächst betätigt die Steuemocke der Steuerhülse ein Druckentlastungsventil und öffnet ein Druckentlastungsventilsystem und damit die Druckentlastungseinrichtung. Es kommt zur Druckentlastung eines ersten Medium-Kanals im Hülsenteil.

In der Schnellkupplung wird anschließend eine vierte Dichteinrichtung im Hülsenteil freigegeben und es erfolgt ein weiterer Druckausgleich zunächst vom ersten Medium-Kanal im Hülsenteil in eine Kammer im Steckteil. Die Schnellkupplung ist dann bis zur Kammer druckentlastet.

Ferner bevorzugt wird eine erste Dichteinrichtung des Steckteiles nach Öffnung eines zusätzlichen Druckreduziergliedes geöffnet, wonach das Kupplungspaar der Schnellkupplung beginnt, sich vollständig zu öffnen. Das Druckentlastungsventilsystem ist durch den fortgesetzten Eingriff der Steuemocke an dem Druckentlastungsventil der weiter in das Druckentlastungsventilsystem verschobenen Steuerhülse noch geöffnet, so dass eine Druckentlastung fortgesetzt wird.

Schließlich öffnet sich die erste Dichteinrichtung vollständig, wodurch durch weitere axiale Verlagerung der Kupplungsteile und des ersten Führungsstiftes (Arbeitsstößel) die Steuernocke der Steuerhülse unter Freigabe des Druckentlastungsventils aus dem Druckentlastungsventilsystem herausgeführt wird, so dass das Druckentlastungsventilsystem schließt und sich der Druck in der Schnellkupplung aufbaut.

In bevorzugter Ausgestaltung der Erfindung ist die Steuerhülse mit mehreren Steuemocken ausführbar, so dass ein Öffnen und Schließen der Schnellkupplung unter mehrmaligem Öffnen und Schließen des Druckentlastungsventilsystems möglich ist. In diesem Fall ist eine Druckentlastung zu unterschiedlichen Zeitpunkten in den Kupplungsteilen der Schnellkupplung möglich.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen in rein schematischer Darstellung:
- Figur 1: eine Außenansicht einer Schnellkupplung im ungekuppelten Zustand;
- Figur 2A: eine perspektivische Ansicht der Schnellkupplung im ungekuppelten Zustand;
- Figur 2B: einen Schnitt durch die Schnellkupplung im ungekuppelten Zustand;
- Figur 2C: einen Schnitt durch eine Druckentlastungseinrichtung in einem Zusatzblock der Schnellkupplung im ungekuppelten Zustand;
- Figur 3: einen Schnitt durch die Schnellkupplung im teilweise gekuppelten Zustand in einem ersten Kupplungsschritt;
- Figur 4: einen Schnitt durch die Schnellkupplung im teilweise gekuppelten Zustand in einem zweiten Kupplungsschritt;
- Figur 5: einen Schnitt durch die Schnellkupplung im teilweise gekuppelten Zustand in einem dritten Kupplungsschritt;
- Figur 6A: eine perspektivische Außenansicht der Schnellkupplung im gekuppelten Zustand;
- Figur 6B: einen Schnitt durch die Schnellkupplung im gekuppelten Zustand nach einem vierten Kupplungsschritt;

- Figur 6C: einen Schnitt durch eine Druckentlastungseinrichtung in dem Zusatzblock der Schnellkupplung im gekuppelten Zustand;
- Figur 7: den Zusatzblock in einer perspektivischen Ansicht des maschinenseitigen Anschlusses;
- Figur 8: einen Schnitt durch den Zusatzblock mit Darstellung der Druckentlastungsverbindungsleitungen und der Rückschlagventile zwischen den Druck-Leitungen und der Druckentlastungseinrichtung und
- Figur 9: einen Schnitt mit mehreren Schnittebenen durch die Schnellkupplung mit Darstellung der Druckentlastungsverbindungsleitungen, der Rückschlagventile zwischen den Druck-Leitungen und der Druckentlastungseinrichtung sowie dem Hebelelement und den maschinenseitigen Verbindungsadaptern.

Im Folgenden wird auf die Figuren Bezug genommen, wobei in allen Figuren gleiche Teile durch gleiche Bezugszeichen bezeichnet sind.

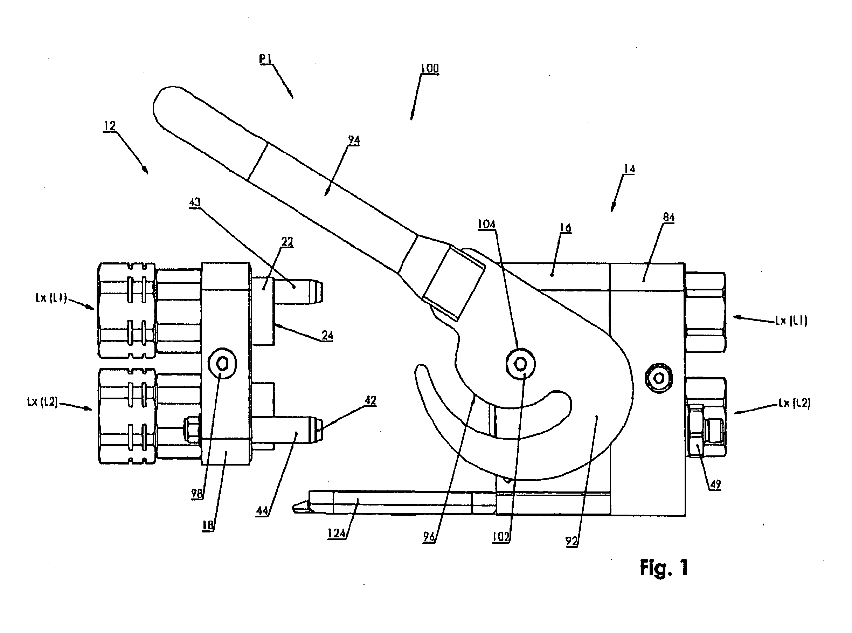

Die insgesamt mit 100 bezeichnete Schnellkupplung - in Figur 1 im ungekuppelten Zustand P1 dargestellt - weist einen bekannten Grundaufbau bestehend aus zwei Kupplungsteilen 12 und 14 auf. Dabei ist das zweite Kupplungsteil ein Steckteil 12 und das erste Kupplungsteil 14 ein Hülsenteil 14. Die Besonderheit der Schnellkupplung 100 besteht darin, dass in einem zweiten Verbindungsblock 18 mehrere Steckteile 12 mehrerer miteinander zu verbindender, unter Druck stehender Leitungen L1, L2 (Lx) angeordnet sind.

Die den möglichen mehreren Steckteilen 12 gegenüber stehenden möglichen mehreren Hülsenteile 14 sind in einem ersten Verbindungsblock 16 zusammengefasst. Die aus den Hülsenteilen 14 herausführenden Leitungen Lx (L1, L2) sind ebenfalls in Figur 1 dargestellt. Ein Steckteil 12 und ein Hülsenteil 14 wird nachfolgend als Kupplungspaar bezeichnet.

Figur 1 zeigt somit eine Schnellkupplung 100 mit zwei Kupplungspaaren, die zwei druckbehafteten Leitungen L1, L2 zugeordnet sind. Eine Besonderheit besteht darin, dass in dem dargestellten Ausführungsbeispiel ein Zusatzblock 84 an dem ersten Verbindungsblock 16 (Kupplungsblock) angebracht ist, in dem sich in diesem Ausführungsbeispiel eine Druckentlastungseinrichtung 70 (Figur 1 nicht sichtbar) befindet. Die nachfolgende Beschreibung und die zugehörigen Figuren erläutern die Anordnung der Druckentlastungseinrichtung 70 und einer Steuereinrichtung 10 (nicht in Figur 1 sichtbar) im zweiten Verbindungsblock 18 (Steckteil 12) oder an dem ersten Verbindungsblock 16 (Kupplungsblock/Hülsenteil 14) und einem dem ersten Verbindungsblock 16 (Kupplungsblock) zugeordneten Zusatzblock 84 als Zusatzgerät.

Die Erfindung betrifft jedoch gleichermaßen eine Ausführung ohne Zusatzblock 84. In diesem Fall sind alle Bauteile, die in dem Zusatzblock 84 angeordnet sind, in dem ersten Verbindungsblock (Kupplungsblock/Hülsenteil 14) angeordnet.

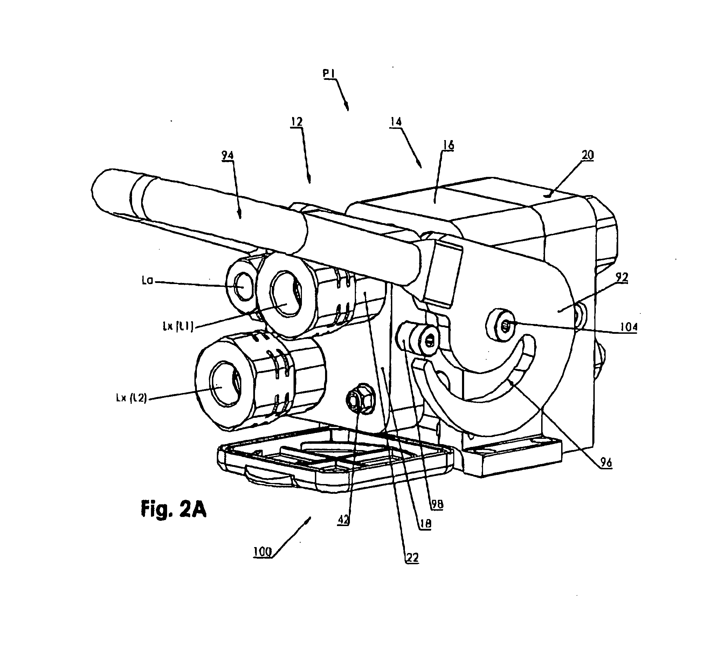

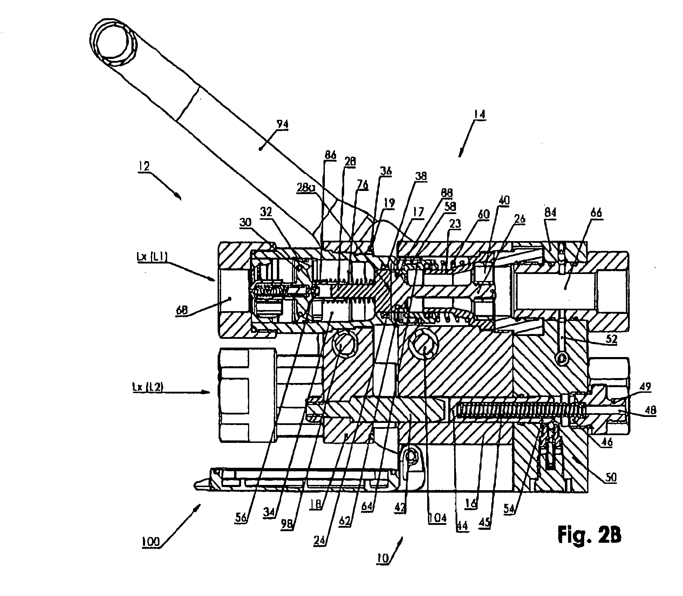

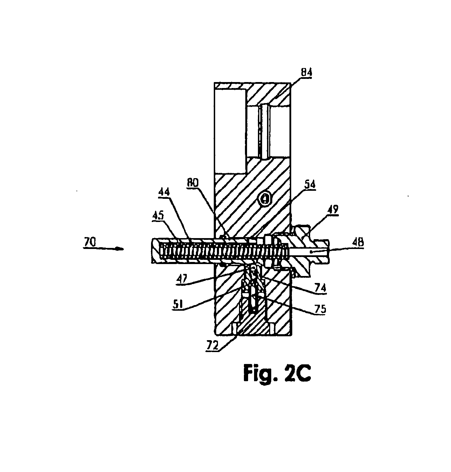

Figur 1 zeigt einen ersten Führungsstift (Arbeitsstößel) 42, der im zweiten Verbindungsblock 18 neben den Leitungen Lx angeordnet ist. Dem ersten Führungsstift (Arbeitsstößel) 42 steht im ersten Verbindungsblock 16 eine in Figur 1 nicht sichtbar angeordnete Steuerhülse 44 (Figur 2) als Teil der Steuereinrichtung 10 gegenüber.

Figur 1 zeigt ferner einen zweiten Führungsstift 43, dem im ersten Verbindungsblock 16 eine Bohrung gegenübersteht. Der zweite Führungsstift 43 ist im zweiten Verbindungsblock 18 zusätzlich zum ersten Führungsstift 42 als Zentrierhilfe angeordnet. Figur 1 zeigt weiter, neben den Druck-Leitungen Lx, ein am Zusatzblock 84 angeordnetes Eliminierungsventil 49. Dieses Eliminierungsventil 49 dient der Druckentlastung beim Kupplungsvorgang der Schnellkupplung 100. Erfindungsgemäß weist die Schnellkupplung 100, wie die Figur 1 zeigt, ein Hebelelement 92 auf, welches einen Hebelarm 94 und eine Hebelaufnahme 96 aufweist. Über eine Hebelbefestigung 102 ist das Hebelelement 92 drehbar am ersten Verbindungsblock 16 gelagert. Das Hebelelement 92 bildet eine Hebeldrehachse 104 aus. Am zweiten Verbindungsblock 18 ist ein Aufnahmeelement 98 angeordnet, welches bei vollständig nach unten gesenktem Hebelelement 92 und Zueinanderführung des Steckteiles 12 zum Hülsenteil 14 in die Hebelaufnahme 96 eingreift. Durch das Hebelelement 92 ist das Steckteil 12 gegenüber dem Hülsenteil 14 verlagerbar und aufgrund der Steuerkurve in der Hebelaufnahme 96 beim Eingreifen des Aufnahmeelementes 98 in die Hebelaufnahme 96 an das Hülsenteil 14 heranführbar und einer hier nicht dargestellten ungekuppelten Position P1 arretierbar und sicherbar. In einer in Figur 1 nicht gekuppelten Position P1 ist das Hülsenteil 14 durch einen klappbaren Deckel 124 verschließbar, so dass das Hülsenteil 14 gegen Verschmutzungen und dergleichen geschützt ist. Den Kupplungsvorgang und die weiteren Funktionen der Schnellkupplung 100 zeigen die weiteren Figuren.

Figur 2A zeigt wieder die Schnellkupplung 100 in ungekuppelter Position P1, wobei das Aufnahmeelement 98 bereits einen ersten Kontakt in der Hebelaufnahme 96 des Hebelelementes 92 aufnimmt. Entgegen der perspektivischen Darstellung der Figur 2A, welche die gleichen Bauelemente wie in der Seitenansicht der Figur 1 zeigt, ist in Figur 2B die Schnellkupplung 100 als Schnittdarstellung gezeigt. Dabei ist in Figur 2B ein Kupplungspaar 12, 14 (Steckteil und Hülsenteil) der druckbehafteten Druckleitung L1 geschnitten dargestellt. Zudem ist die Steuereinrichtung 10 dargestellt, die aus dem Arbeitsstößel 42, einer Steuerhülse 44 und einem Druckentlastungsventilsystem 50 aufgebaut ist. Das Druckentlastungsventilsystem 50 ist Teil der zentralen Druckentlastungseinrichtung 70, die zudem das Eliminierungsventil 49 und eine Druckentlastungsleitung 48 umfasst. Die zentrale Druckentlastungseinrichtung 70 ist im Detail in Figur 2C in einer weiteren Schnittdarstellung analog zu den Figuren 2A, 2B im ungekuppelten Zustand P1 der Schnellkupplung 100 dargestellt.

Das Steckteil 12 liegt in seiner Ausgangsposition einerseits mit einer Gehäusestimfläche 24 seines Gehäuses 22 an einem axial verlagerbaren zweiten Gehäuseelement 62 des Hülsenteiles 14 an. Außerdem liegt ein Stößel 28, der über eine dritte Dichteinrichtung 38 an einem zweiten Gehäuse 22 des Steckteiles 12 abdichtet, mit seiner Gehäusestimfläche 24 an einem fest gelagerten Schiebeelement 26 an.

Das Schiebeelement 26 ist in einem Schiebeelementlager 40 gelagert. Ein in einem Stößellager 86 axial geführter Stößel 28 wird von der Kraft eines ersten Federelementes 76 gegen die dritte Dichteinrichtung 38 gedrückt und verschließt eine Kammer 34 gegen die Atmosphäre. Die Kammer 34 wird in Richtung eines Medium führenden, unter Druck stehenden zweiten Medium-Kanals 68 durch eine erste Dichteinrichtung 30 an einem Dichtsitz 32 verschlossen.

In der Dichteinrichtung 30 kann ein Druckreduzierglied 56 angeordnet sein. Die erfindungsgemäße Funktion der Schnellkupplung 100, entsprechend den weiteren Erläuterungen, ist jedoch auch ohne Druckreduzierglied 56 gegeben.

Das Hülsenteil 14 ist in den ersten Verbindungsblock 16 integriert. Das Hülsenteil 14 dichtet ein äußeres Gehäuse 20 gegen den ersten Verbindungsblock 16 ab. Das äußere Gehäuse 20 des Hülsenteils 14 umfasst das innere erste Gehäuseelement 23, das äußere dritte Gehäuseelement 64 und das vordere zweite Gehäuseelement 62.

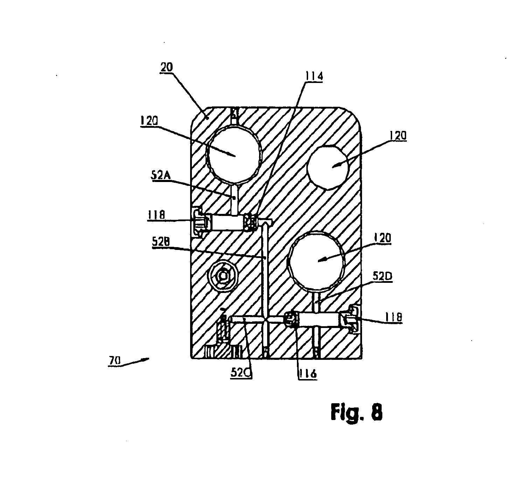

Das zweite Gehäuseelement 62 ist an der Innenwandung einer Bohrung 120 (Figur 8) angeordnet. Das zweite Gehäuseelement 62 ist gegenüber dem dritten Gehäuseelement 64 sowie gegenüber dem ersten Gehäuseelement 23 gegen die Kraft eines ersten und zweiten Federelementes 58, 60 axial verlagerbar. Zwischen den Gehäuseelementen 62 und 64 ist das erste Federelement 58 und zwischen den Gehäuseelementen 64 und 23 ist das zweite Federelement 60 angeordnet. Das Schiebeelement 26 dichtet über eine vierte Dichteinrichtung 88 in ungekuppeltem Zustand P1 das Hülsenteil 14 gegenüber dem axial verlagerbaren dritten Gehäuseelement 64 ab.

An das Schiebeelement 26 schließt sich ein erster Medium-Kanal 66 an, der zu der Medium führenden ersten Druckleitung L1 des Hülsenteils 14 hin offen ist. Der erste Medium-Kanal 66 ist im Ausführungsbeispiel in den Zusatzblock 84 integriert. Wie oben erwähnt ist er auch ohne Zusatzblock 84 vollständig in dem ersten Verbindungsblock (Kupplungsblock) 16 anordbar.

In dem ersten Verbindungsblock 16 und dem Zusatzblock 84 ist eine Steuerhülsenbohrung 78 parallel beabstandet zum Kupplungspaar 12, 14 angeordnet. In dieser Steuerhülsenbohrung 78 ist die Steuerhülse 44 integriert, an die - wie Figur 2B zeigt - der Arbeitsstößel 42 in der ungekuppelten Position P1 noch nicht angreift. Die Steuerhülsenbohrung 78 führt die Steuerhülse 44 bis in den Zusatzblock 84 ein, wobei innerhalb der Steuerhülse 44 eine Steuerhülsenfeder 45 angeordnet ist, die einerseits in der Steuerhülse 44 anliegt und andererseits in einer Vertiefung einer Druckentlastungskammer 46 angeordnet ist. Die Steuerhülse 44 liegt auf einer Achse mit dem Arbeitsstößel 42 und bildet in der Steuerhülsenbohrung 78 in ungekuppeltem Zustand P1 einen Anschlag 80 aus.

Der zur Steuereinrichtung 10 gehörende Arbeitsstößel 42 und mindestens eine auf dem Arbeitsstößel 42 angeordnete Steuernocke 54 greift im ungekuppelten Zustand P1 nicht in das Druckentlastungsventilsystem 50 ein.

Das zur Steuereinrichtung 10 gehörende Druckentlastungsventilsystem 50 ist ein Hauptbestandteil der Druckentlastungseinrichtung 70, die in Figur 2C in vergrößerter Darstellung gezeigt ist. Das Druckentlastungsventilsystem 50 umfasst ein Druckentlastungsventil 72, eine Federsteuerung 74 sowie Ventilelement 51. Das Teil 47 überträgt dabei die Axialbewegung. Hinter dem Druckentlastungsventil 72 (Figur 2C) befindet sich eine Druckentlastungsverbindungsleitung 52 beziehungsweise ein System von Druckentlastungsverbindungsleitungen 52A bis 52D, über die die Kupplungspaare 12, 14 und somit die druckbehafteten Druck-Leitungen Lx (L1, L2) über das zentrale Druckentlastungsventilsystem 50 der Druckentlastungseinrichtung 70 entlüftet werden. Notwendig ist dazu, dass das Druckentlastungsventil 72 während des Kupplungsvorganges zu einem bestimmten Zeitpunkt öffnet und somit eine drucklose Kupplung der Kupplungspaare ermöglicht.

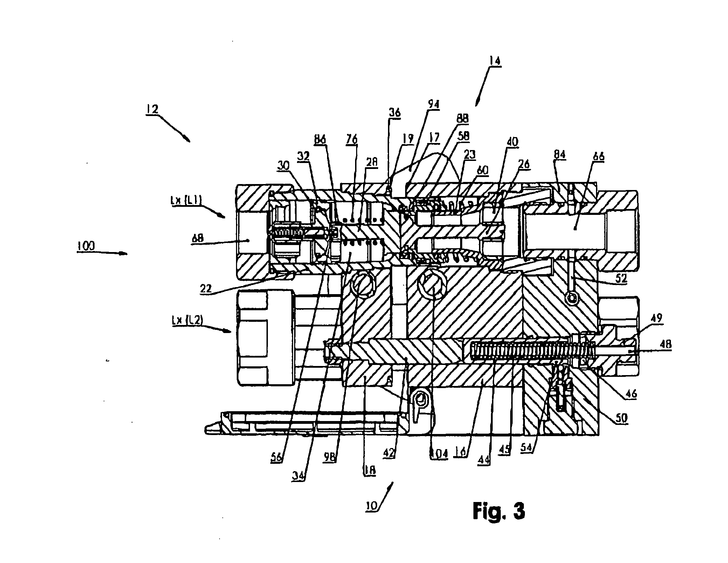

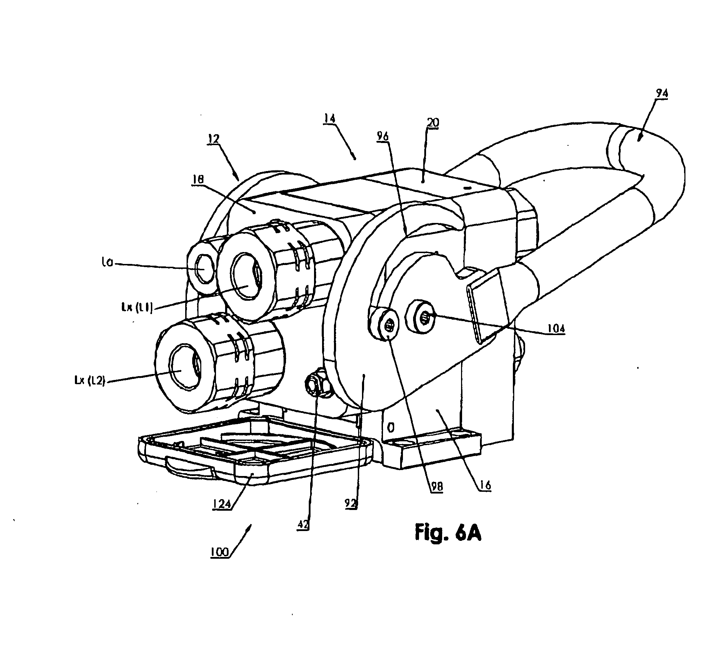

Den Kupplungsvorgang zeigen die Figuren 3, 4 und 5 sowie 6a bis 6C, durch die eine schrittweise Druckentlastung der Schnellkupplung 100 im Steckteil 12 und Hülsenteil 14 erreichbar ist. Im Folgenden wird davon ausgegangen, dass beide Kupplungsteile 12 und 14 in den Medium führenden Kanälen 66, 68 in ungekuppeltem Zustand P1 druckbehaftet sind. Den vollständig gekuppelten Zustand P2 zeigen die Figuren 6A bis 6C, wobei wiederum eine perspektivische Außenansicht, ein Schnitt durch die Schnellkupplung 100 und ein Schnitt durch eine vergrößert dargestellte Druckentlastungseinrichtung 70 der Schnellkupplung 100 dargestellt ist.

Das Kuppeln erfolgt prinzipiell in vier Schritten. Bei dem ersten Kupplungsschritt findet eine Druckentlastung des ersten Medium-Kanals 66 nach Öffnung des Eliminierungsventils 49 statt. Anschließend im zweiten Kupplungsschritt erfolgt das Öffnen der vierten Dichteinrichtung 88 und Eliminieren des Druckes bis hin zur Kammer 34. Im dritten Kupplungsschritt erfolgt wiederum das Öffnen einer Einrichtung, nämlich des Druckreduzierventils 56, wodurch es zu einer Eliminierung des Druckes im zweiten Medium-Kanal 68 kommt, wonach schließlich im vierten Kupplungsschritt ein vollständiges Öffnen des Steckteiles 12 durch Abheben der ersten Dichteinrichtung 30 erfolgt. Es wechseln sich also stets die Vorgänge "Öffnen - Eliminieren - Öffnen - Eliminieren ..." und so weiter ab.

Die Funktion der weiteren Druckentlastung wird im Folgenden näher beschrieben.

Figur 3 zeigt einen Schnitt durch die Schnellkupplung 100 in dem ersten Kupplungsschritt. In diesem ersten Kupplungsschritt wird zur Druckentlastung der Kupplungsteile 12, 14 zunächst das Eliminierungsventil 49 geöffnet.

Die Ausgangsposition für das Öffnen des Eliminierungsventils 49 ist die ungekuppelte Schnellkupplung 100 der Figur 2. Durch die axiale Verlagerung des zweiten Verbindungsblockes 18 mit integriertem Steckteil 12 und erstem Führungsstift (Arbeitsstößel) 42 in Richtung des Hülsenteiles 14 wird das zweite Gehäuse 22 mit seiner Gehäusestimfläche 24 in das Hülsenteil 14 eingeschoben.

Die Steuerhülse 44 wird durch den beginnenden Kupplungsvorgang weiter als bei der Ausgangsposition in die Druckentlastungseinrichtung 70 hinein verschoben.

Die Steuernocke 54 betätigt ein Ventilelement 51, wodurch eine Öffnung zwischen einer Druckentlastungsverbindungsleitung 52 und der Druckentlastungskammer 46 im Druckentlastungsventil 72 freigegeben wird. Dadurch, dass die Druckentlastungskammer 46 mit einer nicht druckbehafteten Druckentlastungsleitung 48 verbunden ist, kann nach dem Prinzip der kommunizierenden Gefäße über das Eliminierungsventil 49 eine Druckentlastung im Hülsenteil 14 stattfinden. Insbesondere der erste Medium-Kanal 66 wird so im Hülsenteil 14 über die Druckentlastungsverbindungsleitung 52 entlastet.

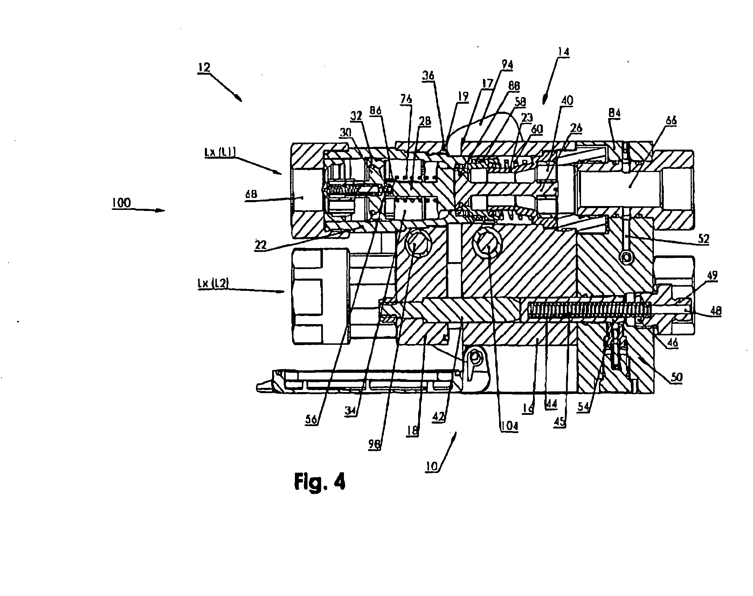

In einem zweiten Kupplungsschritt gemäß Figur 4 werden die Gehäuseelemente 62 und 64 - siehe Figur 2B - gegen die Federelemente 58 und 60 in Richtung des Kanals 66 axial weiter verschoben.

Der Stößel 28 verlagert sich grundsätzlich axial gegen die Kraft des ersten Federelementes 76 infolge der Gegenkraft, die von dem feststehenden Schiebeelement 26 ausgeht, in Richtung des Kanals 68.

Durch diese Anordnung wird eine vierte Dichteinrichtung 88 des Schiebeelementes 26 am dritten Gehäuseelement 64 freigegeben. Die weitere axiale Verschiebung erfolgt durch den ersten Führungsstift (Arbeitsstößel) 42 weiter in Richtung Steuerhülse 44.

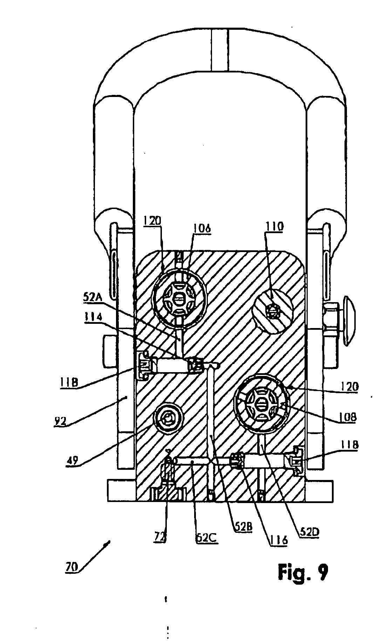

Die Druckentlastung wirkt über die Druckentlastungsverbindungsleitungen 52C, 52B, 52A (Figur 8 und 9) über den ersten Medium-Kanal 66 bis zur Kammer 34 durch Öffnung der Dichteinrichtung 88 im Steckteil 12 fort. Die Steuerhülse 44 verlässt durch diese erste beschriebene Verlagerung seinen Anschlag 80 in der Steuerhülsenbohrung 78 des ersten Verbindungsblocks (Kupplungsblock) 16.

Figur 4 zeigt den Schnitt durch die Schnellkupplung 100 im teilweise gekuppelten Zustand P2 nach dem ersten und dem zweiten Kupplungsschritt.

Es ist erkennbar, dass die vierte Dichteinrichtung 88 durch axiale Verschiebung der Gehäuseelemente 62 und 64 langsam freigegeben ist und eine Verbindung zur Kammer 34 aufweist. Das erste Federelement 76 des Steckteiles 12 befindet sich bereits im teilweise gespannten Zustand. Das Druckentlastungsventilsystem 50 ist geöffnet und ein Druckausgleich über den ersten Medium-Kanal 66 und der Druckentlastungsverbindungsleitung 52C bis 52A bis hin zur Kammer 34 findet statt.

In Fortführung der zueinander führenden Bewegung der Verbindungsblöcke 16 und 18 (Kupplungsvorgang) dringt die Steuerhülse 44 weiter in das Druckentlastungsventilsystem 50 ein.

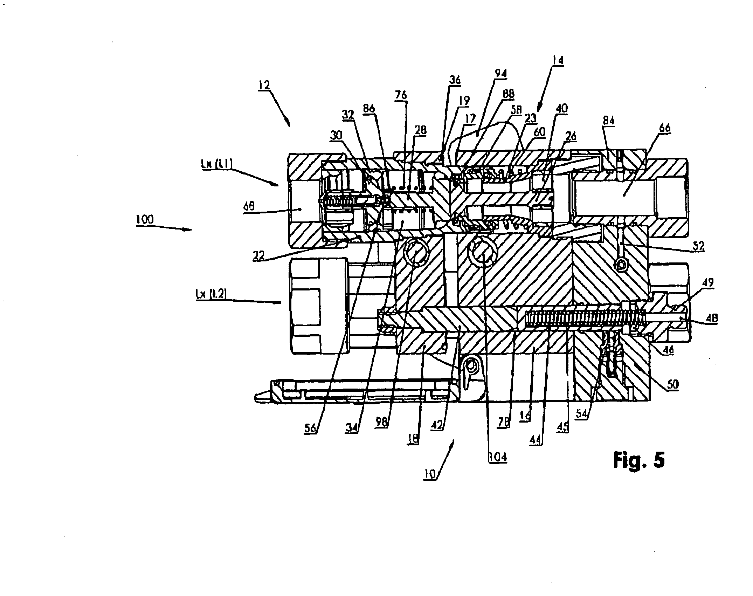

Figur 5 zeigt, dass die Nocke 54 weiterhin im Bereich des Druckentlastungsventils 72 angreift.

In einem dritten Kupplungsschritt, gemäß Figur 5 ermöglicht ein Druckreduzierglied 56 einen ersten Druckausgleich der beiden Kupplungsteile 12 oder 14 über die Kammer 34 hinaus. Die Druckentlastung beziehungsweise ein erster Druckausgleich findet nun zwischen dem zweiten Mediums-Kanal 68 und der Kammer 34 statt. Dazu berührt der Stößel 28 mit seiner der ersten Dichteinrichtung 30 zugewandten Seite einen in die erste Dichteinrichtung 30 integrierten Druckstift, der eine Vorsteuerströmung in vorhandenen Spalten der ersten Dichteinrichtung 30 freigibt.

Während der erzeugten Vorsteuerströmung, die den ersten Druckausgleich zwischen der Kammer 34 und dem zweiten Medium-Kanal 68 bewirkt, liegt die erste Dichteinrichtung 30 aber noch am Dichtsitz 32 an.

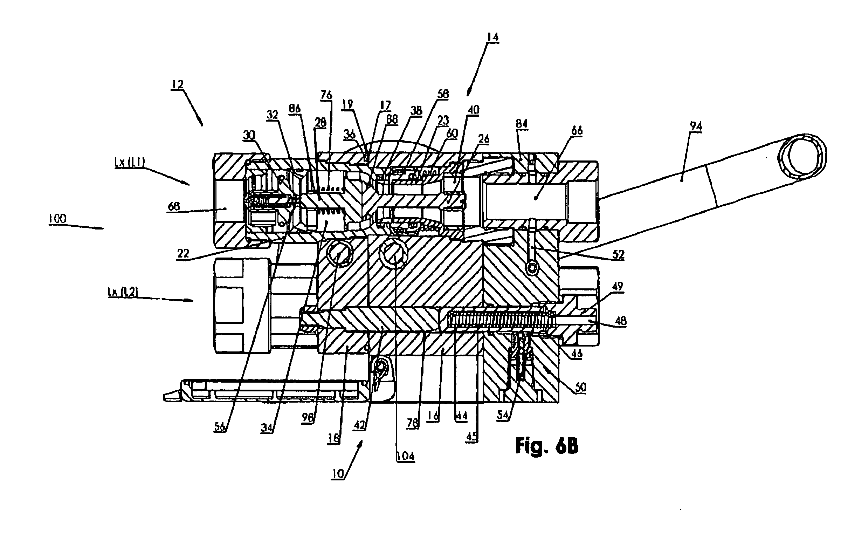

Bei dem weiteren Kupplungsvorgang, einem vierten Kupplungsschritt, wird gemäß Figur 6B die Dichteinrichtung 30 in Richtung des Kanals 68 durch die Einwirkung des Stößels 28 noch weiter axial verlagert. Der Dichtsitz 32 wird freigegeben und über die freigegebene Kammer 34 durch die teilweise geöffnete vierte Dichteinrichtung 88 wird auch der Kanal 68 vollständig durch die Druckentlastungseinrichtung 70 und dessen Druckentlastungsventils 72 druckentlastet.

Figur 6B zeigt ferner, dass der erste Führungsstift (Arbeitsstößel) 42 der Steuerhülse 44 weiter in die Druckentlastungseinrichtung 70 hinein verlagert wird. Das Ende der Steuernocke 54 wurde erreicht. Die Steuemocke 54 ist von dem Druckentlastungsventil 72 abgelaufen. Mit dem Ablaufen der Steuemocke 54 aus dem Druckentlastungsventil 72 schließt sich das Druckentlastungsventilsystem 50 und infolge wird die Druckentlastungskammer 46 und somit das Eliminierungsventil 49 verschlossen.

In der letzten Phase des Kupplungsvorganges der Verbindungsblöcke 16 und 18 wird das Steckteil 12 vollständig in das Hülsenteil 14 eingeschoben. Die Schnellkupplung 100 hat damit ihre gekuppelte Endstellung erreicht und durch das Schließen des Eliminierungsventils ist ein Druckaufbau gewährleistet.

Diese Druckentlastungsfunktion entsprechend den Figuren 3 bis 6C ist durch die Anordnung von mehreren Druckentlastungsverbindungsleitungen 52A, B, C (Figuren 8 und 9) bis hin zur Druckentlastungseinrichtung 70 für beliebig viele Kupplungspaare 12 und 14 realisierbar.

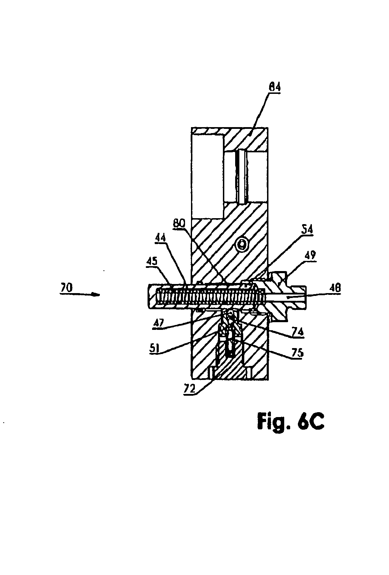

Figur 6A bis C zeigt die Schnellkupplung 100 im vollständig geöffneten gekuppelten Zustand. Dabei zeigt Figur 6A wieder eine perspektivische Ansicht der Schnellkupplung im vollständig gekuppelten Zustand, Figur 6B den Schnitt durch die Schnellkupplung im vollständig gekuppelten Zustand und Figur 6C einen Schnitt durch eine Druckentlastungseinrichtung in dem Zusatzblock der Schnellkupplung im vollständig gekuppelten Zustand.

Das erste Federelement 76 (Figur 6B) befindet sich jetzt im vollständig gespannten Zustand. Der Stößel 28 drückt gegen das feststehende Schiebeelement 26, wodurch sich erste Dichteinrichtung 30 vom Gehäuse 22 des Steckteiles 12 abhebt. Das Druckreduzierventil 56 ist vollständig geöffnet. Der Stößel 28 ist vollständig in Richtung des Hülsenteiles 14 verlagert. Gleichzeitig ist die vierte Dichteinrichtung 88 geöffnet, die dann nicht mehr am dritten Gehäuseelement 64 des Hillsenteils 14 anliegt. Die Gehäusestirnflächen 24 des Steckteiles 12 und des Hülsenteiles 14 sind durch deren Gehäuseelemente 62 gegen die Federelemente 58 und 60 gedrückt, so dass die vierte Dichteinrichtung 88 des Schiebeelementes 26 die Verbindung zwischen Kammer 34 und Kanal 66 vollständig freigibt. Eine Druckentlastung ist nach vollständiger Kupplung der Schnellkupplung 100 nicht mehr nötig.

Die Steuerhülse 44 wurde durch den ersten Führungsstift (Arbeitsstößel) 42 weiter in die Druckentlastungseinrichtung 70 hinein geführt, so dass die Steuernocke 54 nicht mehr in das Druckentlastungsventil 72 eingreift. Das Druckentlastungsventil 72 schließt. Die Druckentlastungsfunktion der Druckentlastungseinrichtung 70 ist damit unterbrochen. In der Schnellkupplung 100 baut sich der volle Medium-Druck der damit verbundenen geöffneten Kupplungsteile 12 und 14 auf.

Figur 6A zeigt die perspektivische Außenansicht der Schnellkupplung 100 im vollständig gekuppelten Zustand. Sichtbar sind die gekuppelten Leitungen L1 und L2 zwischen den Verbindungsblöcken 16 und 18 und der in diesem Ausführungsbeispiel die Druckentlastungseinrichtung 70 beherbergende Zusatzblock 84.

Die Druckentlastungseinrichtung 70 wird, wie Figur 6C zeigt, über die von außen nicht sichtbare Druckentlastungskammer 46 auf die gemeinsame Druckentlastungsleitung 48 geführt. Nur durch ihre Verschlusselemente angedeutet sind die radial zur Druckentlastungskammer 46 angeordneten Druckentlastungsventilsysteme 50, die beim Kupplungsvorgang über den Führungsstift 42 und die Steuerhülse 44 geöffnet und geschlossen werden.

Figur 6A zeigt die Schnellkupplung 100, wie sie dem Benutzer entgegentritt, in der perspektivischen Darstellung. Der Deckel 124 des ersten Verbindungsblocks 16 ist geöffnet und der zweite Verbindungsblock 18 vollständig an den ersten Verbindungsblock 16 herangeführt. Diese Kupplung mit der vorgeschriebenen Druckentlastung wird durch das angeordnete Hebelelement 92 mechanisch unterstützt. Wie bereits in den Figuren 2A bis 2C beschrieben, greift die Hebelaufnahme 96 in das Aufnahmeelement 98 ein, welches sich am zweiten Verbindungsblock 18 befindet. Die Hebelaufnahme 96 stellt für den Kupplungsvorgang eine Art Steuerkurve dar, da mit der Hebelaufnahme 96 die Zusammenführung der Verbindungsblöcke 16, 18 vorbestimmbar ist. Somit ist durch diese Steuerkurve der Hebelaufnahme 96 festlegbar, zu welchem Zeitpunkt die Nocke 54 der Steuerhülse 44 (Figur 10) das Druckentlastungsventilsystem 50 der Druckentlastungseinrichtung 70 beim Schließen beziehungsweise Öffnen der Schnellkupplung 100 zur Druckentlastung öffnet. Die weiteren Bauteile der Figur 6A sind aus der bisherigen Beschreibung insbesondere den Figuren 2A bis 2C bekannt.

Die Öffnung der Schnellkupplung 100 erfolgt in umgekehrter Weise.

Entsprechend den Kupplungsschritten in den Figuren 3 bis 6C wird beim Schließen der Schnellkupplung 100 in umgekehrter Reihenfolge zuerst die Kammer 34 gegenüber dem zweiten Medium-Kanal 68 durch Schließen der ersten Dichteinrichtung 30 (vierter Kupplungsschritt) unter Druckentlastung über die Druckentlastungseinrichtung 70 geschlossen.

Anschließend schließt ebenfalls das Druckreduzierventil 56 (dritter Kupplungsschritt) im Steckteil 12.

Die Kraft des Federelementes 76 führt zu einer weiteren Rückführung des Stößels 28 in den Ausgangszustand. Die Gehäuseelemente 23, 62 und 64 werden ebenfalls unter der Kraft der Federelemente 58 und 60 in ihre Ausgangsposition (ungekuppelte Position P1) zurück verlagert, so dass die vierte Dichteinrichtung 88 (zweiter Kupplungsschritt) des Schiebeelementes 26 wieder an dem dritten Gehäuseelement 64 dichtet.

Dadurch wird im Hülsenteil 14 der erste Medium-Kanal 66 gegen die Kammer 34 beziehungsweise den Stößel 28 bei gleichzeitiger Druckentlastung über die Druckentlastungseinrichtung 70 verschlossen.

Schließlich schließt am Ende des Entkupplungsvorganges die Druckentlastungseinrichtung 70 und somit das Eliminierungsventil 49, indem die Steuereinrichtung 10 den Bereich des Druckentlastungsventils 72 der Druckentlastungseinrichtung 70 verlässt, und der Druckausgleich ist somit unterbrochen. Jedes Kupplungsteil 12 und 14 für sich ist somit nach Trennung der Verbindungsblöcke 16 und 18 sowohl gegenüber den Druckentlastungsverbindungsleitungen 52 als auch stimseitig abgedichtet.

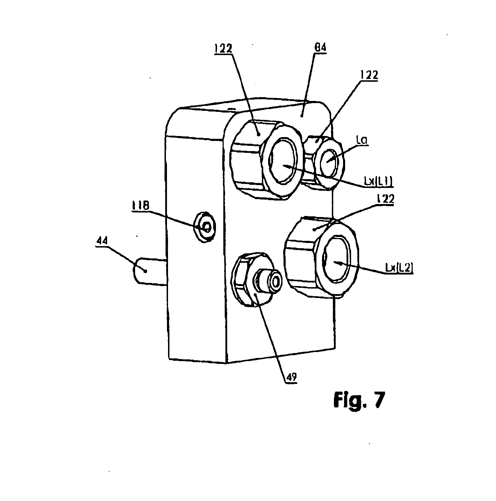

Abschließend zeigen die Figuren 7 bis 9 den Zusatzblock von außen in einer perspektivischen Ansicht des maschinenseitigen Anschlusses und einen Schnitt durch den Zusatzblock mit Darstellung der Druckentlastungsverbindungsleitungen 52A bis 52D sowie einen Schnitt (Figur 9) mit mehreren Schnittebenen durch die Schnellkupplung.

Figur 10 zeigt die maschinenseitigen Anschlussmöglichkeiten des Zusatzblocks 84, wobei neben den Druckleitungen L1, L2 eine zusätzliche Leitung (so genannte Ablass-Leitung) La sichtbar ist. Jeder Leitung sind sogenannte Adapter 122 zugeordnet. Im seitlichen Bereich des Zusatzblocks 84 ist ein Stopfen 118 sichtbar, welcher wie ebenfalls der Schnitt in Figur 8 zeigt, den Zugang zu den Druckentlastungsverbindungsleitungen 52 und insbesondere zu einem ersten Rückschlagventil 114 ermöglicht. Auf der gegenüberliegenden Seite des Zusatzblocks 84 befindet sich auf einer anderen Höhe ebenfalls ein Stopfen 118, der den Zugang zu einem zweiten Rückschlagventil 116 ermögücht. Die jeweiligen Rückschlagventile 114 und 116 ermöglichen die Einstellung der Höhe der Druckentlastung der jeweiligen hier nicht sichtbaren Kupplungspaare 12 und 14.

In Figur 8 zeigt der Schnitt die entsprechenden Bohrungen 120, in denen die Druckentlastungsverbindungsleitungen 52 enden. Eine erste Druckentlastungsverbindungsleitung 52A ist ausgehend von der Bohrung 120 der ersten Druckleitung L1 zugeordnet und ist über das erste Rückschlagventil 114 mit der Druckentlastungseinrichtung 70 verbunden. Analog dazu ist die zweite Druckleitung L2 über eine vierte Druckentlastungsleitung 52D mit einer dritten Druckentlastungsleitung 52C verbunden, wobei in der dritten Druckentlastungsleitung 52C wiederum ein zweites Rückschlagventil 116 zur Einstellung der Höhe der Druckentlastung angeordnet ist. Die dritte Druckentlastungsverbindungsleitung 52C führt wiederum zur Druckentlastungseinrichtung 70. Die erste Druckentlastungsverbindungsleitung 52A und die dritte Druckentlastungsverbindungsleitung 52C sind über die zweite Druckentlastungsverbindungsleitung 52B miteinander verbunden, so dass jede Druckleitung L1, L2 über ein System von Druckentlastungsverbindungsleitungen 52 auf die Druckentlastungsleitung 70 führbar ist.

Figur 9 zeigt die analoge Anordnung der Druckentlastungsverbindungsleitungen 52A bis 52D und die angeordneten Rückschlagventile 114, 116 in verschiedenen Schnittebenen. In den Bohrungen 120 sind die jeweiligen ersten, zweiten und dritten Verbindungsadapter 106, 108 und 110 dargestellt. Zusätzlich zeigt der Schnitt der Figur 9 eine Hülsenbohrung, in die der zweite Führungsstift 43 der Schnellkupplung 100 beim Kupplung- beziehungsweise Entkupplungsvorgang eingreift. Der Aufbau der Figur 9 verdeutlicht insbesondere, dass ein zentrales Druckentlastungseinrichtung 70 auch ohne Zusatzblock 84 vollständig im ersten Verbindungsblock 16 des Hülsenteiles 14 anordbar ist.

Schließlich zeigt Figur 9 schematisch das außen angeordnete Hebelelement 92, welches die mechanische Sicherung und Zusammenführung der Schnellkupplung gewährleistet.

### BEZUGSZEICHENLISTE

- 100: Schnellkupplung
- 10: Steuereinrichtung
- 12: Steckteil
- 14: Hülsenteil
- 16: erster Verbindungsblock
- 17: erste Stirnfläche (erster Verbindungsblock 16)
- 18: zweiter Verbindungsblock (Kupplungsblock)
- 19: zweite Stirnfläche (zweiter Verbindungsblock 18)
- 20: Gehäuse (Hülsenteil 14)
- 22: zweites Gehäuse (Steckteil 12)
- 23: erstes Gehäuseelement
- 24: Gehäusestirnfläche
- 26: Schiebeelement
- 28: Stößel
- 30: erste Dichteinrichtung (Steckteil 12)
- 32: Dichtsitz
- 34: Kammer
- 36: zweite Dichteinrichtung (Stimflächen 17, 19)
- 38: dritte Dichteinrichtung (zweites Gehäuse 22)
- 40: Schiebeelementlager
- 42: erster Führungsstift (Arbeitsstößel)
- 43: zweiter Führungsstift
- 44: Steuerhülse
- 45: Steuerhülsenfeder
- 46: Druckentlastungskammer
- 47: Teil
- 48: Druckentlastungsleitung
- 49: Eliminierungsventil
- 50: Druckentlastungsventilsystem
- 51: Ventilelement
- 52A: erste Druckentlastungsverbindungsleitung
- 52B: zweite Druckentlastungsverbindungsleitung
- 52C: dritte Druckentlastungsverbindungsleitung
- 52D: vierte Druckentlastungsverbindungsleitung
- 54: Steuernocke
- 56: Druckreduzierglied
- 58: erstes Federelement
- 60: zweites Federelement
- 62: zweites Gehäuseelement
- 64: drittes Gehäuseelement
- 66: erster Medium-Kanal
- 68: zweiter Medium-Kanal
- 70: Druckentlastungseinrichtung
- 72: Druckentlastungsventil
- 74: Federsteuerung
- 76: erstes Federelement
- 78: Steuerhülsenbohrung (in Verbindungsblock 16)
- 80: Anschlag
- 84: Zusatzblock
- 86: Stößellager
- 88: vierte Dichteinrichtung
- 92: Hebelelement
- 94: Hebelarm
- 96: Hebelaufnahme
- 98: Aufnahmeelement
- 102: Hebelbefestigung
- 104: Hebeldrehachse
- 106: erster Verbindungsadapter
- 108: zweiter Verbindungsadapter
- 110: dritter Verbindungsadapter
- 114.: erstes Rückschlagventil
- 116: zweites Rückschlagventil
- 118: Stopfen
- 120: Bohrungen
- 122: Adapter (maschinenseitig)
- 124: Deckel

- Lx: Druck-Leitungen
- L1: erste Druckleitung
- L2: zweite Druckleitung
- La: Ablass-Leitung
- P1: ungekuppelte Position
- P2: gekuppelte Position

## Patentansprüche

1. Schnellkupplung (100) zum Verbinden von wenigstens zwei unter Druck stehenden Leitungen (L1, L2) wobei die Schnellkupplung aus einem ersten Kupplungsteil und einem zweiten Kupplungsteil besteht und das erste Kupplungsteil druckdicht mit dem zweiten Kupplungsteil verbindbar ist, wobei das erste Kupplungsteil ein Steckteil (12) und das zweite Kupplungsteil ein Hülsenteil (14) ist und in einer gekuppelten Position (P2) eine Steuereinrichtung (10) für die zentrale Druckentlastungseinrichtung (70) in einem ersten und zweiten Verbindungsblock (16, 18) oder in einem ersten und zweiten Verbindungsblock (16, 18) und einem am zweiten Kupplungsteil anliegenden Zusatzblock (84) angeordnet ist, und wobei als Steuereinrichtung (10) ein im zweiten Verbindungsblock (18) angeordneter erster, als Arbeitsstößel ausgeführter, Führungsstift (42) in gekuppelter Position (P2) auf eine im ersten Verbindungsblock (16) angeordnete Steuerhülse (44) einwirkt, durch die ein Druckentlastungsventilsystem (50) der zentralen Druckentlastungseinrichtung (70) in dem zweiten Verbindungsblock (18) oder in dem zweiten Verbindungsblock (18) und dem Zusatzblock (84) betätigbar ist, **gekennzeichnet durch** eine in einem zweiten Kupplungsteil integrierte oder an einem zweiten Kupplungsteil in einem Zusatzblock (84) extern angeordnete zentrale Druckentlastungseinrichtung (70), wobei die zentrale Druckentlastungseinrichtung (70) über Druckentlastungsverbindungsleitungen (52; 52A, 52B, 52C) mit den unter Druck stehenden Leitungen (L1, L2), die jeweils ein Kupplungspaar bilden, verbindbar ist, und
dass die Kupplungsteile reversibel **durch** ein Hebelelement (92) von einer ungekuppelten Position (P1) in eine gekuppelte Position (P2) bringbar und arretierbar sind, wobei die zentrale Druckentlastungseinrichtung (70) das für alle Leitungen vorhandene Druckentlastungsventilsystem (50) und ein Eliminierungsventil (49) mit einer Druckentlastungsleitung (48) umfasst.

2. Schnellkupplung nach Anspruch 1, **dadurch gekennzeichnet, dass** das Druckentlastungsventilsystem (50) ein Druckentlastungsventil (72) aufweist, welches mindestens ein Ventilelement (51) umfasst.

3. Schnellkupplung nach einem der vorhergehenden Ansprüche, **dadurch gekennzeichnet, dass** die Steuerhülse (44) eine Steuernocke (54) und eine in der Steuerhülse (44) angeordnete Steuerhülsenfeder (45) umfasst.

4. Schnellkupplung nach Anspruch 3, **dadurch gekennzeichnet, dass** der erste als Arbeitsstößel ausgeführte Führungsstift (42) die Steuerhülse (44) aus einer ungekuppelten Position (P1) in die gekuppelte Position (P2) verschiebt, wobei der erste Führungsstift (42) und die Steuerhülse (44) auf einer Achse liegend angeordnet sind.

5. Schnellkupplung nach einem der vorhergehenden Ansprüche, **dadurch gekennzeichnet, dass** die zentrale Druckentlastungseinrichtung (70) über die Druckentlastungsverbindungsleitungen (52A, 52B, 52C) über mindestens ein Rückschlagventil (114, 116) mit jeder der unter Druck stehenden Leitungen (Lx) verbindbar ist.

6. Schnellkupplung nach einem der vorhergehenden Ansprüche, **dadurch gekennzeichnet, dass** das Steckteil (12) eine erste Dichteinrichtung (30) zwischen einem zweiten Medium-Kanal (68) und einer Kammer (34), und eine dritte Dichteinrichtung (38) zwischen einem Stößel (28) und einem zweiten Gehäuse (22) aufweist.

7. Schnellkupplung nach einem der vorhergehenden Ansprüche, **dadurch gekennzeichnet, dass** das Hülsenteil (14) eine vierte Dichteinrichtung (88) zwischen einem Schiebeelement (26) und dem ersten Gehäuse (20), welches ein erstes und zweites Gehäuseelement (62, 64) umfasst, aufweist.

8. Schnellkupplung nach einem der vorhergehenden Ansprüche, **dadurch gekennzeichnet, dass** bei einem Kupplungsvorgang des Steckteiles (12) und des Hülsenteiles (14) von der ungekuppelten Position in die gekuppelte Position (P1, P2) gleichzeitig der erste und zweite Verbindungsblock (16, 18) oder der erste und zweite Verbindungsblock mit dem angeordneten Zusatzblock (16, 18, 84) zueinander reversibel verlagerbar sind.

9. Schnellkupplung nach einem der vorhergehenden Ansprüche, **dadurch gekennzeichnet, dass** der erste Führungsstift (42) und die Steuerhülse (44) in einem ersten Kupplungsschritt axial verlagert werden, wodurch der erste Medium-Kanal (66) im als Hülstenteil ausgeführten Kupplungsteil (14) mit einem Eliminierungsventil (49) verbunden wird, wobei über die Steuernocke (54) der Steuerhülse (44) das Druckentlastungsventilsystem (50) durch Betätigung des Druckentlastungsventils (72) geöffnet wird und die Druckentlastungsverbindungsleitungen (52A bis 52D) zur Druckentlastungskammer (46) und zur anschließenden Druckentlastungsleitung (48) zur Erzeugung eines Druckausgleichs freigegeben werden.

10. Schnellkupplung nach einem der vorhergehenden Ansprüche, **dadurch gekennzeichnet, dass** der erste Führungsstift (42) der Steuerhülse (44) in einem zweiten Kupplungsschritt weiter axial verlagerbar ist und unter gleichzeitiger Freigabe der vierten Dichteinrichtung (88) die Kammer (34) mit dem ersten Medium-Kanal (66) im Hülsenteil (14) bis hin zum Eliminierungsventil (49) verbindet, wobei die Steuernocke (54) der Steuerhülse (44) das Druckentlastungsventilsystem (50) geöffnet hält und die Druckentlastungsverbindungsleitungen (52A bis 52D) zur Druckentlastungskammer (46) und zur anschließenden Druckentlastungsleitung (48) zur Erzeugung eines Druckausgleichs bis zur Kammer (34) innerhalb der Schnellkupplung (100) freigibt.

11. Schnellkupplung nach einem der vorhergehenden Ansprüche, **dadurch gekennzeichnet, dass** nach dem zweiten Kupplungsschritt in einem dritten Kupplungsschritt ein Druckreduzierglied (56) durch Betätigung eines Druckstiftes mittels des Stößels (28) in der ersten Dichteinrichtung (30) öffenbar ist, wodurch ein erster Druckausgleich zwischen dem zweiten Medium-Kanal (68), der Kammer (34) über den ersten Mediums-Kanal (66) bis hin zum Eliminierungsventil (49) erzeugbar ist.

12. Schnellkupplung nach einem der vorhergehenden Ansprüche, **dadurch gekennzeichnet, dass** in einem vierten Kupplungsschritt durch eine weitere axiale Verlagerung des ersten Führungsstiftes (42) zum vollständigen Druckausgleich unter gleichzeitiger vollständiger Freigabe der ersten Dichteinrichtung (30) die Kammer (34) im als Steckteil ausgeführten Kupplungsteil (12) zum zweiten Medium-Kanal (68) öffnet, wodurch ein erster Druckausgleich zwischen dem zweiten Medium-Kanal (68), der Kammer (34) über den ersten Mediums-Kanal (66) bis hin zum Eliminierungsventil (49) erzeugbar ist, und die Steuerhülse (44) vollständig in das Druckentlastungsventilsystem (50) eingeführt wird, und danach die Steuernocke (54) der Steuerhülse (44) am Druckentlastungsventilsystem (50) vorbeigeführt wird und die Druckentlastungsverbindungsleitungen (52A bis 52D) zur Druckentlastungskammer (46) und zur anschließenden Druckentlastungsleitung (48) unter Aufbau eines Druckes in der Schnellkupplung (100) schließen.

13. Schnellkupplung nach einem der vorhergehenden Ansprüche, **dadurch gekennzeichnet, dass** der erste als Kupplungsblock ausgeführte Verbindungsblock (16) und der zweite Verbindungsblock (18) in der gekuppelten Position (P2) durch eine zweite Dichteinrichtung (36) zwischen der ersten Stirnfläche (17) des ersten Verbindungsblocks (16) und der zweiten Stirnfläche (19) des zweiten Verbindungsblocks dichtet.

14. Schnellkupplung nach einem der vorhergehenden Ansprüche, **dadurch gekennzeichnet, dass** der zweite Verbindungsblock (18) ein Aufnahmeelement (98) aufweist.

15. Schnellkupplung nach einem der vorhergehenden Ansprüche, **dadurch gekennzeichnet, dass** der erste als Kupplungsblock ausgeführte Verbindungsblock (16) eine Hebelbefestigung (102) für das Hebelelement (92) mit seinem Hebelarm (94) aufweist.

16. Schnellkupplung nach einem der vorhergehenden Ansprüche, **dadurch gekennzeichnet, dass** das Hebelelement (92) mit einer Hebelaufnahme (96) in der ungekuppelten Position (P1) in das Aufnahmeelement (98) eingreift und durch eine zum Hülsenteil (14) gerichtete Schwenkbewegung um eine Hebeldrehachse (104) des Hebelelementes (92) das Steckteil (12) in das Hülsenteil (14) führt und in der gekuppelten Position (P2) reversibel arretiert.

17. Schnellkupplung nach Anspruch 16, **dadurch gekennzeichnet, dass** in der Hebelaufnahme (96) die gewünschte Steuerkurve für das Zusammenführen von Steckteil (12) und Hülsenteil (14) ablegbar ist.

## Claims

1. A quick connector (100) for connecting at least two pressurized lines (L1, L2), wherein the quick connector consists of a first connecting part and a second connecting part and the first connecting part can be connected to the second connecting part in a pressure-tight manner, wherein the first connecting part is a plug part (12) and the second connecting part is a sleeve part (14) and, in a connected position (P2), a control device (10) for the central pressure-releasing device (70) is arranged in a first and second connecting block (16, 18) or in a first and second connecting block (16, 18) and an auxiliary block (84), which rests against the second connecting part, and wherein, in the coupled position (P2), a first guide pin (42), which is embodied as a working plunger and which is arranged in the second connecting block (18), acts as control device (10) on a control sleeve (44), which is arranged in the first connecting block (16) and through which a pressure-releasing valve system (50) of the central pressure-releasing device (70) in the second connecting block (18) or in the second connecting block (18) and the auxiliary block (84) can be actuated, **characterized by** a central pressure-releasing device (70), which is arranged in a second connecting part or which is externally arranged on a second connecting part in an auxiliary block (84), wherein the central pressure-releasing device (70) can be connected to the pressurized lines (L1, L2), which in each case form a connection pair, via pressure-releasing connecting lines (52; 52A, 52B, 52C), and in that the connecting parts can be reversibly brought from a non-connected position (P1) into a connected position (P2) by means of a lever element (92) and can be locked, wherein the central pressure-releasing device (70) comprises the pressure-releasing valve system (50), which is available for all lines, and an eliminating valve (49) comprising a pressure-releasing line (48).

2. The quick connector according to claim 1, **characterized in that** the pressure-releasing valve system (50) encompasses a pressure-releasing valve (72), which comprises at least one valve element (51).

3. The quick connector according to one of the preceding claims, **characterized in that** the control sleeve (44) comprises a cam (54) and a control sleeve spring (45), which is arranged in the control sleeve (44).

4. The quick connector according to claim 3, **characterized in that** the first guide pin (42), which is embodied as working plunger, displaces the control sleeve (44) from a non-connected position (P1) into the connected position (P2), wherein the first guide pin (42) and the control sleeve (44) are arranged so as to be located on one axis.

5. The quick connector according to one of the preceding claims, **characterized in that** the central pressure-releasing device (70) can be connected to each of the pressurized lines (Lx) via the pressure-releasing connecting lines (52A, 52B, 52C) via at least one back-pressure valve (114, 116).

6. The quick connector according to one of the preceding claims, **characterized in that** the plug part (12) encompasses a first sealing device (30) between a second medium duct (68) and a chamber (34), and a third sealing device (38) between a plunger (28) and a second housing (22).

7. The quick connector according to one of the preceding claims, **characterized in that** the sleeve part (14) encompasses a fourth sealing device (88) between a sliding element (26) and the first housing (20), which comprises a first and second housing element (62, 64).

8. The quick connector according to one of the preceding claims, **characterized in that** the first and second connecting block (16, 18) or the first and second connecting block with the arranged auxiliary block (16, 18, 84) can simultaneously be displaced reversibly to one another in response to a connecting process of the plug part (12) and of the sleeve part (14) from the non-connected position into the connected position (P1, P2).

9. The quick connector according to one of the preceding claims, **characterized in that** the first guide pin (42) and the control sleeve (44) are axially displaced in a first connecting step, whereby the first medium duct (66) in the connecting part (14), which is embodied as a sleeve part, is connected to an eliminating valve (49), wherein the pressure-releasing valve system (50) is opened by actuating the pressure-releasing valve (72) via the cam (54) of the control sleeve (44), and the pressure-releasing connecting lines (52A to 52D) to the pressure-releasing chamber (46) and to the following pressure-releasing line (48) are released for creating a pressure compensation.

10. The quick connector according to one of the preceding claims, **characterized in that** the first guide pin (42) of the control sleeve (44) can be further axially displaced in a second connecting step and connects the chamber (34) to the first medium duct (66) in the sleeve part (14) up to the eliminating valve (49) while simultaneously releasing the fourth sealing device (88), wherein the cam (54) of the control sleeve (44) holds the pressure-releasing valve system (50) open and releases the pressure-releasing connecting lines (52A to 52D) to the pressure-releasing chamber (46) and to the following pressure-releasing line (48) for creating a pressure compensation up to the chamber (34) within the quick connector (100).

11. The quick connector according to one of the preceding claims, **characterized in that**, after the second connecting step, a pressure-reducing member (56) can be opened in a third connecting step by actuating a pressure pin by means of the plunger (28) in the first sealing device (30), whereby a first pressure compensation can be created between the second medium duct (68), the chamber (34) via the first medium duct (66) up to the eliminating valve (49).

12. The quick connector according to one of the preceding claims, **characterized in that** the chamber (34) in the connecting part (12), which is embodied as plug part, opens towards the second medium duct (68) in a fourth connecting step by means of a further axial displacement of the first guide pin (42) for the complete pressure compensation while simultaneously completely releasing the first sealing device (30), whereby a first pressure compensation can be created between the second medium duct (68), the chamber (34) via the first medium duct (66) up to the eliminating valve (49), and the control sleeve (44) is inserted completely into the pressure-releasing valve system (50), and the cam (54) of the control sleeve (44) is then guided past the pressure-releasing valve system (50), and the pressure-releasing connecting lines (52A to 52D) to the pressure-releasing chamber (46) and to the following pressure-releasing line (48) close while building up a pressure in the quick connector (100).

13. The quick connector according to one of the preceding claims, **characterized in that** the first connecting block (16), which is embodied as coupling block, and the second connecting block (18) in the connected position (P2) seals by means of a second sealing device (36) between the first front surface (17) of the first connecting block (16) and the second front surface (19) of the second connecting block.

14. The quick connector according to one of the preceding claims, **characterized in that** the second connecting block (18) encompasses an accommodating element (98).

15. The quick connector according to one of the preceding claims, **characterized in that** the first connecting block (16), which is embodied as coupling block, encompasses a lever mount (102) for the lever element (92) with its lever arm (94).

16. The quick connector according to one of the preceding claims, **characterized in that** the lever element (92) engages with the accommodating element (98) by means of a lever accommodation (96) in the non-connected position (P1) and guides the plug part (12) into the sleeve part (14) by means of a pivot movement directed towards the sleeve part (14) about a lever axis of rotation (104) of the lever element (92) and locks it reversibly in the connected position (P2).

17. The quick connector according to claim 16, **characterized in that** the desired control cam for bringing plug part (12) and sleeve part (14) together can be stored in the lever accommodation (96).

## Revendications

1. Raccord rapide (100) destiné à relier au moins deux conduits (L1, L2) sous pression, où le raccord rapide est constitué d'une première pièce de raccord et d'une deuxième pièce de raccord, et la première pièce de raccord peut être reliée de façon étanche à la pression avec la deuxième pièce de raccord, la première pièce de raccord étant une pièce emboîtable (12) et la deuxième pièce de raccord une pièce de douille (14), et, dans une position accouplée (P2), un dispositif de commande (10) pour l'installation centrale de décompression (70) est disposé dans un premier et un deuxième bloc d'assemblage (16, 18) ou dans un premier et un deuxième bloc d'assemblage (16, 18) et dans un bloc supplémentaire (84) reposant sur la deuxième pièce de raccord, et où, en guise de dispositif de commande (10), une première tige de guidage (42) conçue comme un pilon de travail et disposée dans le deuxième bloc d'assemblage (18) agit, dans la position accouplée (P2), sur une douille de commande (44) installée dans le premier bloc d'assemblage (16), permettant d'actionner un système de soupape de décompression (50) de l'installation de décompression (70) dans le deuxième bloc d'assemblage (18) ou dans le deuxième bloc d'assemblage (18) et le bloc supplémentaire (84), **caractérisé par** une installation centrale de décompression (70) intégrée dans une deuxième pièce de raccord ou disposée à l'extérieur dans un bloc supplémentaire (84) sur une deuxième pièce de raccord, où l'installation centrale de décompression (70) peut être reliée aux conduits (L1, L2) sous pression formant respectivement une paire de raccords, par le biais de conduits de liaison de décompression (52 ; 52A, 52B, 52C), et
en ce que les pièces de raccord peuvent être basculées d'une position non accouplée (P1) vers une position accouplée (P2) et bloquées ainsi, de façon réversible, par un élément de levier (92), où l'installation centrale de décompression (70) comprend le système de soupape de décompression (50) en place pour tous les conduits, ainsi qu'une soupape d'évacuation (49) avec un conduit de décompression (48).

2. Raccord rapide selon la revendication 1, **caractérisé en ce que** le système de soupape de décompression (50) comporte une soupape de décompression (72) comprenant au moins un élément de soupape (51).

3. Raccord rapide selon l'une des revendications précédentes, **caractérisé en ce que** la douille de commande (44) comprend une came de commande (54) et un ressort de douille de commande (45) monté dans la douille de commande (44).

4. Raccord rapide selon la revendication 3, **caractérisé en ce que** la première tige de guidage (42) conçue comme un pilon de travail déplace la douille de commande (44) d'une position non accouplée (P1) vers la position accouplée (P2), la première tige de guidage (42) et la douille de commande (44) étant disposées étendues sur un axe.

5. Raccord rapide selon l'une des revendications précédentes, **caractérisé en ce que** l'installation centrale de décompression (70) peut être reliée à chacun des conduits sous pression (Lx) par au moins un clapet anti-retour (114, 116), par le biais des conduits de liaison de décompression (52A, 52B, 52C).

6. Raccord rapide selon l'une des revendications précédentes, **caractérisé en ce que** la pièce emboîtable (12) comporte un premier dispositif d'étanchéité (30) entre un deuxième canal à fluide (68) et une chambre (34), et un troisième dispositif d'étanchéité (38) entre un poussoir (28) et un deuxième boîtier (22).

7. Raccord rapide selon l'une des revendications précédentes, **caractérisé en ce que** la pièce de douille (14) comporte un quatrième dispositif d'étanchéité (88) entre un élément poussoir (26) et le premier boîtier (20) comprenant un premier et un deuxième élément de boîtier (62, 64).

8. Raccord rapide selon l'une des revendications précédentes, **caractérisé en ce que** dans une procédé d'accouplement entre la pièce emboîtable (12) et la pièce de douille (14), de la position non accouplée vers la position accouplée (P1, P2), le premier et le deuxième bloc d'assemblage (16, 18) simultanément ou le premier et le deuxième bloc d'assemblage avec le bloc supplémentaire (16, 18, 84) installé peuvent être déplacés de façon réversible les uns par rapport aux autres.

9. Raccord rapide selon l'une des revendications précédentes, **caractérisé en ce que** la première tige de guidage (42) et la douille de commande (44) sont déplacées axialement dans une première étape d'accouplement, reliant ainsi le premier canal à fluide (66) à une soupape d'évacuation (49) dans la pièce de raccord (14) conçue comme une pièce de douille, où la came de commande (54) de la douille de commande (44) ouvre le système de soupape de décompression (50) en actionnant la soupape de décompression (72), et les conduits de liaison de décompression (52A à 52D) vers la chambre de décompression (46) et vers le conduit de décompression (48) suivant sont libérés afin de procéder à une égalisation de pression.

10. Raccord rapide selon l'une des revendications précédentes, **caractérisé en ce que** la première tige de guidage (42) de la douille de commande (44) peut être déplacée davantage axialement au cours d'une deuxième étape d'accouplement, et relie la chambre (34) au premier canal à fluide (66) dans la pièce de douille (14), jusqu'à la soupape d'évacuation (49), tout en libérant simultanément le quatrième dispositif d'étanchéité (88), où la came de commande (54) de la douille de commande (44) permet de maintenir ouvert le système de soupape de décompression (50) et de libérer les conduits de liaison de décompression (52A à 52D) vers la chambre de décompression (46) et vers le conduit de décompression (48) suivant, jusqu'à la chambre (34) dans le raccord rapide (100), afin de procéder à l'égalisation de la pression.

11. Raccord rapide selon l'une des revendications précédentes, **caractérisé en ce qu'**au cours d'une troisième étape d'accouplement après la deuxième étape d'accouplement, un organe de réduction de pression (56) peut être ouvert en actionnant une tige de pression au moyen du poussoir (28) dans le premier dispositif d'étanchéité (30), ce qui permet de procéder à une première égalisation de pression entre le deuxième canal à fluide (68) et la chambre (34) en passant par le premier canal à fluide (66), jusqu'à la soupape d'évacuation (49).

12. Raccord rapide selon l'une des revendications précédentes, **caractérisé en ce qu'**au cours d'une quatrième étape d'accouplement, un nouveau déplacement axial de la première tige de guidage (42) permet d'ouvrir la chambre (34) vers le deuxième canal à fluide (68), dans la pièce de raccord (12) conçue comme une pièce emboîtable, en vue de l'égalisation complète de la pression, en libérant simultanément complètement le premier dispositif d'étanchéité (30), ce qui permet ainsi de procéder à une première égalisation de pression entre le deuxième canal à fluide (68) et la chambre (34) en passant par le premier canal à fluide (66) jusqu'à la soupape d'évacuation (49), et la douille de commande (44) est introduite entièrement dans le système de soupape de décompression (50), puis la came de commande (54) de la douille de commande (44) passe devant le système de soupape de décompression (50), et les conduits de liaison de décompression (52A à 52D) vers la chambre de décompression (46) et vers le conduit de décompression (48) suivant sont fermés, tout en établissant une pression dans le raccord rapide (100).

13. Raccord rapide selon l'une des revendications précédentes, **caractérisé en ce que** dans la position accouplée (P2), le premier bloc d'assemblage (16) conçu comme un bloc d'accouplement ainsi que le deuxième bloc d'assemblage (18) sont rendus étanches par un deuxième dispositif d'étanchéité (36) entre la première face frontale (17) du premier bloc d'assemblage (16) et la deuxième face frontale (19) du deuxième bloc d'assemblage.

14. Raccord rapide selon l'une des revendications précédentes, **caractérisé en ce que** le deuxième bloc d'assemblage (18) comporte un élément de réception (98).

15. Raccord rapide selon l'une des revendications précédentes, **caractérisé en ce que** le premier bloc d'assemblage (16) conçu comme un bloc d'accouplement comporte une fixation de levier (102) pour l'élément de levier (92) avec son bras de levier (94).

16. Raccord rapide selon l'une des revendications précédentes, **caractérisé en ce que** dans la position non accouplée (P1), l'élément de levier (92) s'introduit avec un support de levier (96) dans l'élément de réception (98), et guide la pièce emboîtable (12) dans la pièce de douille (14), par un mouvement de pivotement autour d'un axe de rotation de levier (104) de l'élément de levier (92), en direction de la pièce de douille (14), tout en la bloquant de façon réversible dans la position accouplée (P2).

17. Raccord rapide selon la revendication 16, **caractérisé en ce que** la courbe de commande souhaitée pour l'assemblage de la pièce emboîtable (12) et de la pièce de douille (14) peut être mémorisée dans le support de levier (96).
